# EUROPÄISCHE PATENTANMELDUNG

(11) **EP 1 398 679 A1**
(43) Veröffentlichungstag der Anmeldung: **17.03.2004**
(21) Anmeldenummer: 03018608.4
(22) Anmeldetag: 19.08.2003
(51) Int. Cl.: G05B 19/10, B60R 16/00, B60R 16/02, B60K 37/06, B60K 35/00

(54) **Verfahren zur Anordnung von Auslösefunktionen mehrerer Bedienfelder**

(30) Priorität: 10.09.2002 DE 10242213
(71) Anmelder: DaimlerChrysler AG, 70567 Stuttgart (DE)
(72) Erfinder: Bauer, Jürgen, 71332 Waiblingen (DE); Fricke, Rainer, 71297 Mönsheim (DE); Rastetter, Ina, 75382 Althengstett (DE); Stephan, Wolfgang, 71384 Weinstadt (DE); Zygan, Andreas, 76316 Malsch (DE)

(57) **Zusammenfassung**

Ein Verfahren zur Anordnung von Auslösefunktionen (1a-8d) mehrerer Bedienfelder (1-8), welche Bedienorte (9) für jeweils ein eine Funktion (1a-8d) auslösendes Bedienelement aufweisen. Folgende Verfahrensschritte sind vorgesehen:
a) Erkennung der Anordnung der Auslösefunktionen (1a-8d) und deren Referenz-Anzahl (S) bei Referenzausstattung der Bedienfelder (1-8),
b) Erkennung der Ist-Anzahl (I) von Auslösefunktionen (1a-8d) ,
c)Verändern der Auslösefunktion (1a-8d) an mindestens einem Bedienort (9) nach mindestens einem vorgegebenen Kriterium, wenn D ≥ 1 ist, wobei D die Differenz ist zwischen Referenz-Anzahl (S) und Ist-Anzahl (I).

## Beschreibung

Die Erfindung betrifft ein Verfahren mit den Merkmalen des Oberbegriffs des Anspruches 1.

Aus DE 199 55 070 A1 ist eine Schalteranordnung zum Schalten und/oder zur Auslösung von Funktionen, insbesondere für ein Bedienfeld in einem Kraftfahrzeug bekannt. Jeder Schalter enthält einen voreinstellbaren Code, welcher seine Auslösefunktion repräsentiert. Eine Steuerschaltung ermittelt den Code des Schalters. Somit kann jeder Schalter an beliebiger Stelle in einem Bedienfeld oder auch in mehreren derartigen Bedienfeldern zum Einsatz kommen. Die Auslösefunktion des Schalters ist unabhängig vom Einsatzort durch seinen Code festgelegt. Die auszulösende Funktion kann nach Wahl frei im Bedienfeld angeordnet werden.

Der Erfindung liegt die Aufgabe zugrunde, die Anordnung der Auslösefunktionen sinnvoll zu verändern.

Diese Aufgabe wird durch die Merkmalskombination des Anspruches 1 gelöst.

Erfindungsgemäß wird die Anordnung der Auslösefunktionen und deren Referenz-Anzahl bei einer Referenzausstattung, z.B. bei voll ausgestatteten Bedienfeldern, erkannt oder ermittelt. Bei dieser Referenz-Anzahl ist die Anordnung der Auslösefunktionen festgelegt. Nur bei einer individuellen Ausstattung der Bedienfelder mit einer gegenüber der Referenz-Anzahl geringeren Ist-Anzahl von Auslösefunktionen wird eine Veränderung der Auslösefunktion an mindestens einem Bedienort vorgenommen, indem eine Auslösefunktion an einem Bedienort durch eine andere Auslösefunktion ersetzt wird. Dabei wird nach mindestens einem vorgegebenen Kriterium, z.B. mittels eines in einer Steuereinrichtung abgelegten Steuerprogramms, vorgegangen. Ein bevorzugtes Kriterium ist die Wertigkeit (Priorität) einer Auslösefunktion, insbesondere eine Rangfolge der Auslösefunktionen nach Wichtigkeit und/oder Häufigkeit in den verschiedenen Ausstattungsvarianten. Ein weiteres bevorzugtes Kriterium ist die Einstufung der Handhabungsfreundlichkeit bestimmter Bedienorte abhängig von ihrer räumlichen Anordnung (Ergonomie). Vorzugsweise wird die Anordnung von Auslösefunktionen in funktionsbezogenen Gruppen als Kriterium berücksichtigt. Vorteilhaft ist eine räumlich logische Anordnung (z.B. Fensterheberschalter in der Tür eines Kraftfahrzeugs) als Kriterium geeignet.

Eine Auslösefunktion wird verändert, indem sie durch eine andere Auslösefunktion ersetzt wird. Vorzugsweise wird eine Veränderung auch dadurch erzielt, dass ein Bedienort gegenüber der Referenz-Ausstattung keine Auslösefunktion mehr hat.

Vorzugsweise wird das Verfahren bei der Festlegung von Auslösefunktionen in Bedienfeldern eines Kraftfahrzeuges angewandt. Hier können kostengünstig auch bei unterschiedlichen individuellen Ausstattungsvarianten prinzipiell dieselben Bedienfelder verwendet werden.

Die Bedienelemente sind vorzugsweise als Schalter, Taster, Joystick oder dergleichen ausgebildet.

Bevorzugte Weiterbildungen und vorteilhafte Ausführungsformen der Erfindung sind den Unteransprüchen entnehmbar.

Durch Veränderung der Auslösefunktionen können je nach individueller Ausstattung verschiedene Auslösefunktionen im Vergleich zur Anordnung bei Referenzausstattung innerhalb desselben Bedienfeldes oder in Richtung eines anderen Bedienfeldes "aufrücken".

Dies ist insbesondere vorteilhaft, wenn die Differenz zwischen Referenz-Anzahl (bei Referenzausstattung) und Ist-Anzahl der Auslösefunktionen genau der Anzahl der Bedienorte bzw. der Auslösefunktionen eines Bedienfeldes entspricht. Dieses Bedienfeld mit nicht erforderlichen Auslösefunktionen kann dann derart verändert werden, dass es mit Auslösefunktionen besetzt wird, welche bei Referenzausstattung in einem anderen Bedienfeld angeordnet sind. Hierdurch kann ein ergonomisch günstiges (z.B. für die Handhabung durch einen Fahrer an dem Armaturenbereich im Kraftfahrzeug) Bedienfeld auch weiter genutzt werden, nur eben mit gegenüber der Referenzausstattung anderen Auslösefunktionen. Auf das bei Referenzausstattung verwendete Bedienfeld für diese Auslösefunktionen kann dann raumsparend zugunsten einer anderen Nutzung in diesem Bereich, z.B. einer Ablage für den Fahrer, verzichtet werden.

Insbesondere finden diese Wechsel der Bedienfelder für bestimmte Auslösefunktionen dann statt, wenn die obengenannte Differenz der Summe der Bedienorte bzw. Auslösefunktionen eines Bedienfeldes bzw. mehrerer Bedienfelder ist.

Das "Aufrücken" der Auslösefunktionen findet vorzugsweise in Leserichtung für den Benutzer statt. Dies ist z.B. etwa horizontal von links nach rechts. Dieser Ablauf wird durch entsprechend gestaltete Bedienfelder unterstützt, indem mehrere Bedienorte und/oder Bedienfelder etwa in einer Richtung, insbesondere horizontal, nebeneinanderliegend angeordnet sind.

Vorzugsweise erfolgt die Zuordnung einzelner Auslösefunktionen zu einem Bedienfeld nach funktionalen Zusammenhängen. So sind beispielsweise Auslösefunktionen für das Schiebe-/Hebedach und für die Innenbeleuchtung in demselben Bedienfeld, welches beispielsweise über der Windschutzscheibe eines Kraftfahrzeuges liegt, angeordnet.

Es können auch ein oder mehrere Bedienorte vorgesehen sein, deren Auslösefunktionen trotz einer individuellen Ausstattung unverändert bleiben. Dabei kann es sich z.B. um sicherheitsrelevante Funktionen handeln oder um Funktionen, welche an bestimmten Bedienorten funktional besonders gut positioniert sind.

Vorzugsweise erfolgt die Veränderung der Auslösefunktionen elektronisch mittels einer Steuereinrichtung. Hierzu kann die Steuereinrichtung die individuelle Ausstattung als Eingangsgröße empfangen und verarbeiten. Mittels entsprechender Ausgangssignale verändert die Steuereinrichtung z.B. eine die Auslösefunktion des Bedienelements repräsentierende Kennung. Hierzu kann die Steuereinrichtung ein geeignetes Verarbeitungsprogramm enthalten.

Die Erfindung wird anhand der in den Figuren dargestellten Ausführungsbeispiele näher erläutert.

Dabei zeigen:
- Fig. 1: Mehrere Bedienfelder bei Referenzausstattung,
- Fig. 2: Zwei Bedienfelder gemäß Fig. 1 bei individueller Ausstattung,
- Fig. 3: Zwei Bedienfelder gemäß Fig. 1 bei einer weiteren individuellen Ausstattung.

Es sind insgesamt acht Bedienfelder 1 - 8 vorgesehen. Alle Bedienfelder 1 - 8 enthalten im vorliegenden Ausführungsbeispiel jeweils vier Bedienorte 9 für jeweils eine Auslösefunktion. In weiteren, hier nicht dargestellten Ausführungsbeispielen können die einzelnen Bedienfelder eine andere Anzahl und/oder eine unterschiedliche Anzahl von Bedienorten 9 enthalten. Die Auslösefunktionen 7a - 7d des siebten Bedienfeldes 7 und die Auslösefunktionen 8a - 8d des achten Bedienfeldes 8 sind fest eingestellt, das heißt sie werden auch bei individueller Auswahl von benötigten Auslösefunktionen nicht verändert.

Ein erstes Bedienmodul 10 umfasst die ersten drei Bedienfelder 1 - 3 mit jeweils vier Auslösefunktionen 1a-1d/2a-2d/3a-3d. Das zweite Bedienmodul 11 umfasst die Bedienfelder 4 - 6 mit jeweils vier Auslösefunktionen 4a-4d/5a-5d/6a-6d.

Über Anschlussleitungen 12 sind die Bedienorte 9 bzw. die darin verbauten Bedienelemente an eine Steuereinrichtung 13 angeschlossen. Die Bedienelemente weisen eine ihre Auslösefunktion 1a-8d repräsentierende Kennung auf, welche bei aktiviertem Bedienungselement von der Steuereinrichtung 13 identifiziert wird. Die Steuereinrichtung 13 ist über eine Bus-Schnittstelle 14 und Bus-Leitungen 15 an ein Bussystem 16 (z.B. CAN-Bussystem) angeschlossen. Über das Bus-System 16 und Abzweigleitungen 17, 18 wiederum ist die Steuereinrichtung 13 an Steuergeräte 19, 20 und weitere, hier nicht dargestellte Steuergeräte eines Kraftfahrzeuges angeschlossen. Die Steuergeräte setzen die aktivierten Auslösefunktionen um.

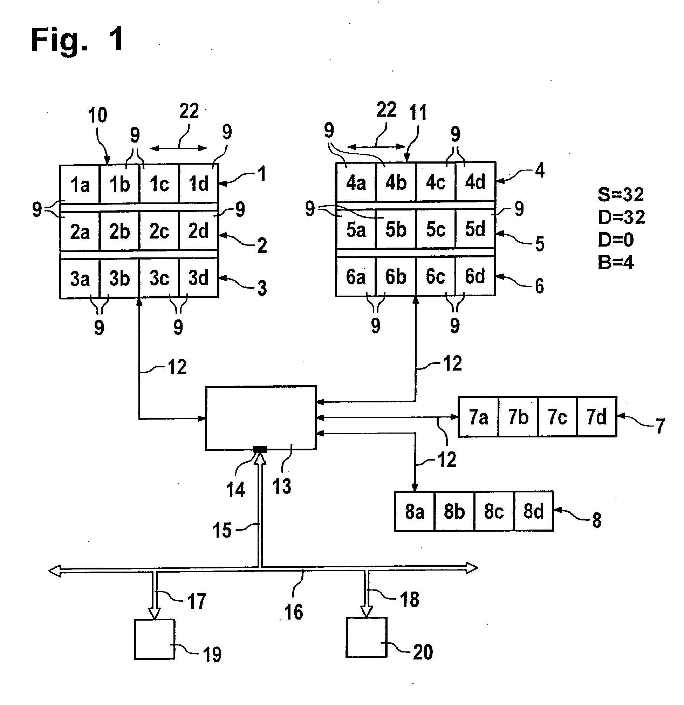

In der Referenzausstattung gemäß Fig.1 ist jeder Bedienort 9 mit der Auslösefunktion 1a - 8d eines hier nicht im einzelnen dargestellten Bedienelements besetzt. Jedes Bedienelement ist hier vereinfacht durch eine Auslösefunktion 1a-8d repräsentiert. Die Referenz-Anzahl S und die Ist-Anzahl I der Auslösefunktionen betragen dann S=I=32. Die Differenz D zwischen beiden Anzahlen ist D=0. Die Anzahl der Bedienorte B ist B=4.

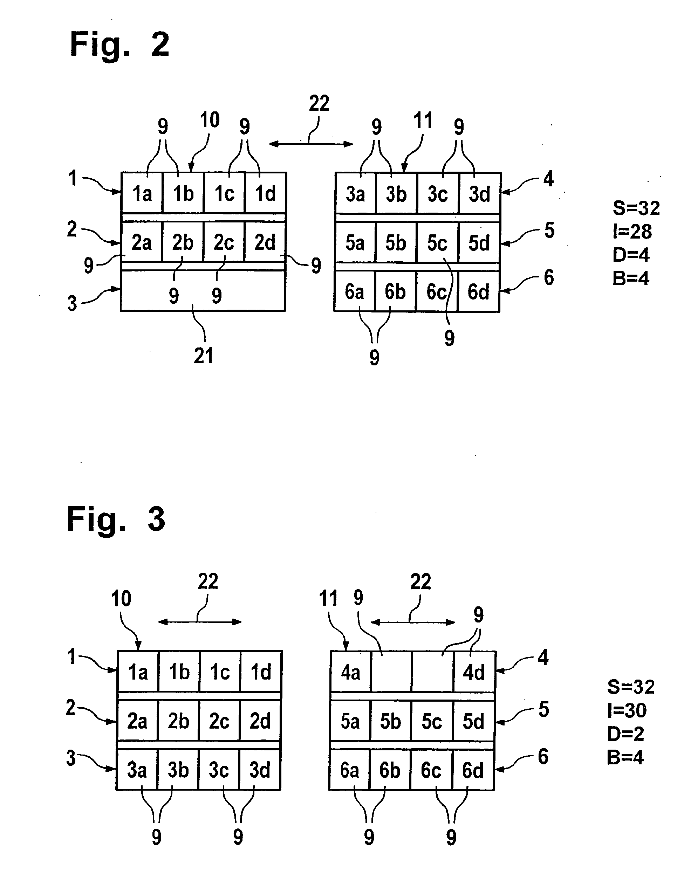

Die Bedienfelder 7 und 8 sind in Fig.2 und Fig.3 der Einfachheit halber nicht dargestellt.

Beispielhaft sei angenommen, dass in einer individuell ausgewählten Ausstattung die Auslösefunktionen 4a-4d nicht benötigt werden. In diesem Fall ergibt sich: S=32, I=28, D=4, B=4. Deshalb können vier andere Auslösefunktionen in die ursprünglichen Bedienorte 9 des Bedienfeldes 4 "aufrücken". Mit anderen Worten werden die ursprünglichen Auslösefunktionen 4a-4d verändert, indem sie durch die Auslösefunktionen 3a-3d ersetzt werden (Fig.2).

Dieses Verändern kann durch Lösen einer Steckverbindung der Bedienelemente in den Bedienorten 9 im Bedienfeld 3 erfolgen. Diese Bedienelemente werden dann in die Bedienorte 9 des Bedienfeldes 4 eingesteckt. Jedes Bedienelement kann mit einer die jeweilige Auslösefunktion repräsentierenden Kennung ausgestattet sein. Beim Betätigen bzw. Aktivieren eines Bedienelements wird dessen Auslösefunktion aufgrund der Kennung in der Steuereinrichtung 13 erkannt. Alternativ kann eine die Auslösefunktion repräsentierende Kennung der Bedienelemente mittels der Steuereinrichtung 13 umprogrammiert werden derart, dass die Kennungen im Bedienfeld 4 nunmehr die Auslösefunktionen 3a-3d repräsentieren. Dies hat den Vorteil, dass einzelne Bedienelemente nicht physisch versetzt werden müssen.

Das Bedienfeld 3 in Fig.2 ist nicht mehr notwendig. Es kann statt dessen als Ablage 21 für den Fahrer, z.B. zur Aufbewahrung von Gegenständen, umfunktioniert werden.

Bei der Ausstattung gemäß Fig.3 werden lediglich die Auslösefunktionen 4b und 4c nicht benötigt. Es ergibt sich S=32, I=30, D=2 und B=4. In diesem Fall werden keine Auslösefunktionen verändert. Alternativ kann die nicht benötigte Auslösefunktion 4c durch die Auslösefunktion 4a verändert werden, so dass die Auslösefunktionen 4c und 4d in Reihenrichtung 22 unmittelbar nebeneinander angeordnet sind.

## Patentansprüche

1. Verfahren zur Anordnung von Auslösefunktionen (1a-8d) mehrerer Bedienfelder (1-8), welche Bedienorte (9) für jeweils ein eine Funktion (1a-8d) auslösendes Bedienelement aufweisen,
**gekennzeichnet durch**
folgende Verfahrensschritte:
a) Erkennung der Anordnung der Auslösefunktionen (1a-8d) und deren Referenz-Anzahl (S) bei einer Referenzausstattung der Bedienfelder (1-8),
b) Erkennung der Ist-Anzahl (I) von Auslösefunktionen (1a-8d),
c)Verändern der Auslösefunktion (1a-8d) an mindestens einem Bedienort (9) nach mindestens einem vorgegebenen Kriterium, wenn D ≥ 1 ist, wobei D die Differenz ist zwischen Referenz-Anzahl (S) und Ist-Anzahl (I).

2. Verfahren nach Anspruch 1,
**dadurch gekennzeichnet,**
**dass** die Auslösefunktionen (1a-8d) sämtlicher Bedienorte (9) eines Bedienfeldes (1-8) verändert werden.

3. Verfahren nach Anspruch 1 oder 2,
**dadurch gekennzeichnet,**
**dass** eine oder mehrere Auslösefunktionen (1a-8d) nur verändert werden, wenn die Differenz (D) ≥ B ist, wobei B die Anzahl der Bedienorte (9) eines Bedienfeldes (1-8) ist.

4. Verfahren nach einem der vorhergehenden Ansprüche,
**dadurch gekennzeichnet,**
**dass** die Auslösefunktion (1a-8d) an einem Bedienort (9) in Abhängigkeit der für die individuelle Ausstattung ausgewählten Auslösefunktionen (1a-8d) erfolgt.

5. Verfahren nach einem der vorhergehenden Ansprüche,
**dadurch gekennzeichnet,**
**dass** an mindestens einem Bedienort (9) die Auslösefunktion (1a-8d) im Vergleich zur Referenzausstattung unverändert bleibt.

6. Verfahren nach einem der vorhergehenden Ansprüche,
**dadurch gekennzeichnet,**
**dass** mindestens ein Bedienfeld (1-8) mehrere nebeneinanderliegende, insbesondere etwa horizontal nebeneinanderliegende, Bedienorte (9) aufweist.

7. Verfahren nach einem der vorhergehenden Ansprüche,
**dadurch gekennzeichnet,**
**dass** mehrere Bedienfelder (1-8) mit Abstand nebeneinander, insbesondere etwa horizontal nebeneinander, angeordnet sind.

8. Verfahren nach einem der vorhergehenden Ansprüche,
**dadurch gekennzeichnet,**
**dass** die Auslösefunktionen (4a-4d) eines zweiten Bedienfeldes (4) zu ihrer Veränderung zumindest teilweise durch die in Referenzausstattung einem ersten Bedienfeld (3) zugeordneten Auslösefunktionen (3a-3d) ersetzt werden.

9. Verfahren nach einem der vorhergehenden Ansprüche,
**dadurch gekennzeichnet,**
**dass** Bedienelemente jeweils eine festgelegte Auslösefunktion (1a-8d) aufweisen und
**dass** diese Bedienelemente an den zugeordneten Bedienorten (9) lösbar fixiert sind.

10. Verfahren nach Anspruch 9,
**dadurch gekennzeichnet,**
**dass** Bedienelemente mittels einer Steckverbindung fixiert sind.

11. Verfahren nach einem der vorhergehenden Ansprüche,
**dadurch gekennzeichnet,**
**dass** Bedienelemente jeweils eine variable Auslösefunktion (1a-8d) aufweisen.

12. Verfahren nach Anspruch 11,
**dadurch gekennzeichnet,**
**dass** Bedienelemente am zugeordneten Bedienort (9) unlösbar fixiert sind.

13. Verfahren nach einem der vorhergehenden Ansprüche,
**dadurch gekennzeichnet,**
**dass** die Bedienelemente eine ihre Auslösefunktion (1a-8d) repräsentierende Kennung aufweisen und an eine Steuereinrichtung (13) angeschlossen sind, welche die Kennung eines aktivierten Bedienelements identifiziert und mit Umsetzmitteln (19,20) zur Umsetzung der Auslösefunktion (1a-8d) verbunden ist.

14. Verfahren nach Anspruch 13,
**dadurch gekennzeichnet,**
**dass** die Kennung der Bedienelemente programmierbar ist.
